**Europäisches Patentamt**

**European Patent Office**

**Office européen des brevets**

(19)

(11) Veröffentlichungsnummer : **0 432 674 B1**

(12) **EUROPÄISCHE PATENTSCHRIFT**

(45) Veröffentlichungstag der Patentschrift :
13.09.95 Patentblatt 95/37

(51) Int. Cl.⁶ : **H04L 27/36, H03D 9/06**

(21) Anmeldenummer : **90123641.4**

(22) Anmeldetag : **08.12.90**

(54) **QAM-Modulator mit verbesserter Trägerunterdrückung.**

(30) Priorität : 14.12.89 DE 3941281
07.09.90 DE 4028370

(43) Veröffentlichungstag der Anmeldung :
19.06.91 Patentblatt 91/25

(45) Bekanntmachung des Hinweises auf die
Patenterteilung :
13.09.95 Patentblatt 95/37

(84) Benannte Vertragsstaaten :
AT BE CH DE ES FR GB IT LI NL SE

(56) Entgegenhaltungen :
EP-A- 0 480 145
DE-A- 4 006 723
PATENT ABSTRACTS OF JAPAN, Bd. 6, Nr.
136 (E-120)(1014) 13. April 1982; &
JP-A-57061311
IEEE TRANSACTIONS ON MICROWAVE THE-
ORY AND TECHNIQUES, Bd. 30, Nr. 1, Januar
1982, New York,US;Seiten 34 - 41; HIROYO
OGAWA et al.: "A 26 GHz band integrated
circuit of a double-balanced mixer and circulators"

(56) Entgegenhaltungen :
IEEE INTERNATIONAL CONFERENCE ON
COMMUNICATIONS 1986, Toronto, CA, 22-25
Juni 1986; IEEE, New York, US, 1986; Seiten
1027 - 1032, ANANASSO: "On the design of rf
filters for advanced digital modulation systems"
IEEE TRANSACTIONS ON MICROWAVE THE-
ORY AND TECHNIQUES, Bd. 38, Nr. 7, Juli
1990,New York,US;Seiten 896 - 903; HARU-
HIKO KATO et al.: "A 30 GHz MMIC receiver
for satellite transponders"

(73) Patentinhaber : Alcatel SEL
Aktiengesellschaft
Lorenzstrasse 10
D-70435 Stuttgart (DE)
(84) DE
Patentinhaber : ALCATEL N.V.
Strawinskylaan 341,
(World Trade Center)
NL-1077 XX Amsterdam (NL)
(84) BE CH ES FR GB IT LI NL SE AT

(72) Erfinder : Müller, Fred-Egon, Dr.
Allmendstrasse 41
W-77530 Pforzheim (DE)

(74) Vertreter : Pohl, Herbert, Dipl.-Ing et al
Alcatel SEL AG
Patent- und Lizenzwesen
Postfach 30 09 29
D-70449 Stuttgart (DE)

**Beschreibung**

Die Erfindung betrifft eine Modulatorstufe gemäß dem Oberbegriff von Anspruch 1 und deren Verwendung als Mischstufe.

Zur Übertragung von digitalen Nachrichten werden die Signale mit einem Modulator auf einen Träger moduliert. Ein bekanntes Prinzip eines Direktmodulators, der in Transmission arbeitet, weist einen Träger- und Signaleingang und einen Signalausgang auf,die wie folgt verknüpft sind. Der Trägereingang und der Signalausgang sind über zwei Wege miteinander verbunden, wobei auf einem Weg ein Phasenverzögerungsglied angeordnet ist. Ferner ist auf jedem der beiden Wege ein nichtlineares Halbleiterbauelement derart angeordnet, daß die nichtlinearen Halbleiterbauelemente aufgrund ihrer Polarität und der Anordnung des Phasenverzögerungsgliedes, das eine Phasenverzögerung um 180° bewirkt, bezüglich des Trägers im Gleichtakt schalten. Hierdurch wird am Signalausgang der Träger unterdrückt. Liegt nun ein Signal in Form einer Modulationsspannung an dem Verzögerungsweg an, schalten die nichtlinearen Halbleiterbauelemente bezüglich der Modulationsspannung im Gegentakt, was die Modulation des Trägers am Signalausgang bewirkt. Ein solcher Modulator kann auch als Mischer verwendet werden. Eine spezielle Struktur eines nach dem o.g. Prinzip arbeitenden Modulators und dessen Verwendung als Mischstufe ist in der DE-PS 29 44 642 beschrieben. Das Phasenverzögerungsglied des beschriebenen Modulators besteht aus einem Leiterstück mit der Länge $\frac{\lambda}{2}$ der Mittenfrequenz des Trägers.

Der bekannte Amplitudenmodulator weist nun aufgrund der unterschiedlichen Ausgestaltung der beiden Übertragungswege, einmal über den elektrisch kurzen Weg und einmal über den Phasenverzögerungsweg, eine beschränkte Trägerunterdrückung auf und kann nur für niederstufige Modulationsformen verwendet werden.

Der Erfindung liegt die Aufgabe zugrunde, eine Modulatorstufe zu schaffen, bei der die Trägerspannung stärker unterdrückt wird.

Diese Aufgabe wird bei einer gattungsgemäßen Anordnung durch die Merkmale des Anspruchs 1 gelöst.

Weitere Ausgestaltungen der Erfindung sind den übrigen Ansprüchen und dem folgenden Teil der Beschreibung zu entnehmen.

Die mit der Erfindung erzielten Vorteile liegen insbesondere darin, daß die Temperaturabhängigkeit der Trägerunterdrückung der Modulationsstufe für im Richtfunk vorkommende Temperaturbereiche zu vernachlässigen ist, die Amplitudenlinearität verbessert und die Frequenzabhängigkeit der Phasenschaltung reduziert wird.

Die ausführliche Beschreibung der Erfindung erfolgt anhand der Figuren 1 bis 4 auf Ausführungsbeispiele von Modulatorstufen bezogen. Die Verwendung als Mischstufe wird am Ende der Beschreibung erläutert.

Fig. 1      eine schematische Darstellung der erfindungsgemäßen Doppelmodulatorstufe,

Fig. 2      ein erstes Ausführungsbeispiel in Form einer Doppelmodulatorstufe in Streifenleitertechnik ausgebildet, für hohe Trägerfrequenzen,

Fig. 3      ein zweites Ausführungsbeispiel in Form einer Doppelmodulatorstufe mit diskreten Bauelementen aufgebaut, für niedrige Frequenzen, und

Fig. 4      eine schematische Darstellung eines 16 QAM-Modulators.

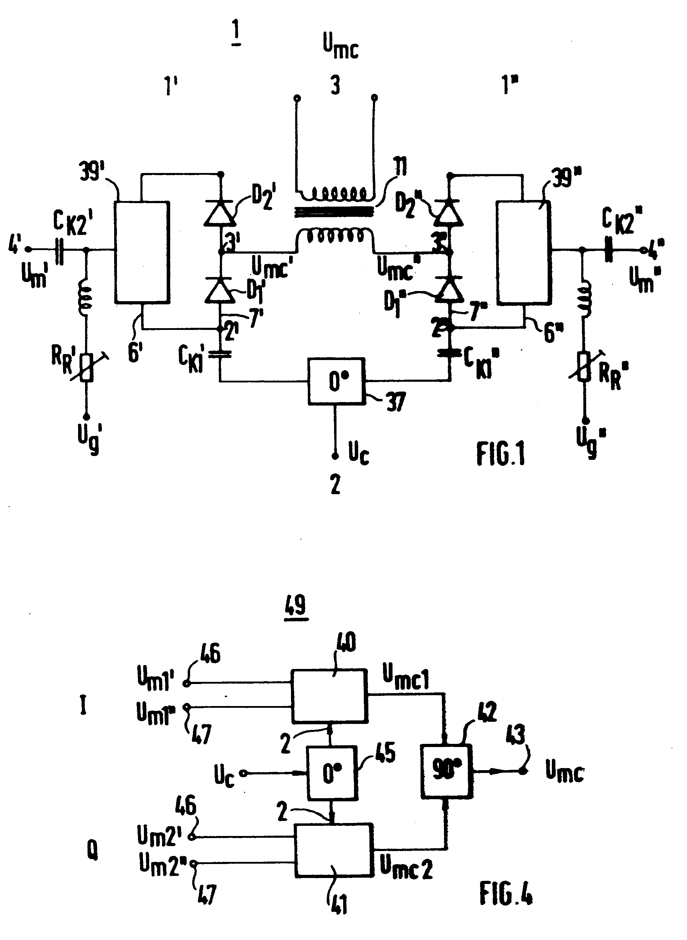

Zur Beschreibung des prinzipiellen Aufbaus der Doppelmodulatorstufe 1 anhand der Fig. 1 werden zuerst die an und für sich bekannten Teilmodulatorstufen 1′ und 1″ und anschließend die erfindungsgemäße Doppelmodulatorstufe 1 mit ihrer Wirkungsweise erläutert.

Die Beschreibung der Teilmodulatorstufen 1′, 1″ wird nur anhand der Teilmodulatorstufe 1′ durchgeführt, gilt aber auch auf die Teilmodulatorstufe 1″, da beide Teilmodulatorstufen 1′ und 1″ gleich aufgebaut sind und auch gleich betrieben werden.

Die Teilmodulatorstufe 1′ weist einen Trägereingang 2′, einen Signaleingang 4′ und einen Signalausgang 3′ auf. Am Trägereingang 2′ liegt der Träger mit der Spannung $U_c{'}$, am Signalausgang 3′ der modulierte Träger mit der Spannung $U_{mc}{'}$ und am Signaleingang 4′ ein digitales Signal mit der Modulationsspannung $U_m{'}$ an. Vom Trägereingang 2′ zum Signalausgang 3′ der Teilmodulatorstufe 1′ führen zwei Wege, ein elektrisch kurzer Weg 7′ und ein Phasenverzögerungsweg 6′, auf dem sich ein Phasenverzögerungsglied 39′ befindet, das eine Verschiebung der Phase des Trägers $U_c$ um 180° oder ein ungeradzahliges, ganzes Vielfaches von 180° bewirkt. Vom Trägereingang 2′ aus wird jedem der beiden Wege die gleiche Leistung mit gleicher Phasenlage zugeführt. Auf jedem der beiden Wege ist eine Halbleiterdiode $D_1{'}$, $D_2{'}$ angeordnet, die bezüglich des Signalausgangs 3′ entgegengesetzte Polarität aufweisen.

Die Halbleiterdiode $D_2{'}$ auf dem Phasenverzögerungsweg 7′ ist bezogen auf die Ausbreitungsrichtung des Trägers hinter dem Phasenverzögerungsglied 39′ angeordnet, so daß die beiden Halbleiterdioden $D_1{'}$ und $D_2{'}$ bezüglich des Trägers im Gleichtakt schalten. Beim bisher beschriebenen Teil der Teilmodulatorstufe 1′ herrscht, aufgrund der Anordnung der Halbleiterdioden $D_1'$ und $D_2'$ und der Ausgestaltung der beiden Übertragungswege 6′, 7′ am Signalausgang 3′ im Idealfall Trägerspannungsunterdrückung, da die Schaltung wie eine Brücke wirkt. Im Realfall ist eine Optimierung der Trägerspannungsunterdrückung notwendig. Hierzu weist die Modulatorstufe 70 zum Abgleich im unmodulierten Zustand einen regelbaren Widerstand $R_r$ auf, der am Potential $U_g$ anliegt und mit dem Signaleingang 4′ verbunden ist (nicht abgebildet).

Mit dem Phasenverzögerungsweg 6′ ist der Signaleingang 4′ verbunden, über den die Modulationsspannung $U_m'$ angelegt wird′ die ein Schalten der beiden Halbleiterdioden $D_1'$ und $D_2'$ im Gegentakt bewirkt. Wie eine solche Wirkung erzielbar ist, wird aus der Beschreibung der Ausführungsbeispiele noch verdeutlicht. Der Signaleingang 4′ ist mit einem Tiefpaß 18′, 19′ und der Signalausgang mit einem Hochpaß 20′ versehen.

Liegt nun am Signaleingang 4′, 4″ eine Modulationsspannung $U_m'$ mit ausreichend hoher Amplitude zum Aussteuern der Halbleiterdioden $D_1'$ und $D_2'$ an, so sperrt die eine Halbleiterdiode $D_1'$ und die andere Halbleiterdiode $D_2'$ ist nichtsperrend, wodurch am Signalausgang 3′ die volle Trägerspannung $U_c'$ anliegt. Ändert man das Vorzeichen von $U_m$, dann ändert sich auch das Vorzeichen von $U_{mc}$, was als Phasenumschaltung zu betrachten ist.

Um Amplitudenlinearität zu erreichen, werden an den Signaleingang 4′ kleinere Modulationsspannungen $U_m'$ angelegt, wodurch die eine Halbleiterdiode, z.B. $D_1'$, weniger als die andere Halbleiterdiode, z.B. $D_2'$, durchschaltet. Das Gleichgewicht wird hierdurch am Signalausgang 3′, 3″ nur verschoben und somit eine resultierende, modulierte Trägerspannung $U_{mc}$ erzeugt. Der Betrag der modulierten Trägerspannung $U_{mc}$ hängt vom Betrag der Modulationsspannung $U_m$ und die Phase vom Vorzeichen der Modulationsspannung $U_m$ ab. Liegt nun z.B. am Signaleingang 4′ eine positive Modulationsspannung $U_m$ an, so ist die Halbleiterdiode $D_1'$ stärker leitend als die Halbleiterdiode $D_2'$, wodurch der elektrisch kurze Weg 7′ gegenüber dem Phasenverzögerungsweg 6′ niederohmiger ist, und die Übertragung über den elektrisch kurzen Weg 7′ dominiert. Weist die Modulationsspannung $U_m$ einen negativen Betrag auf, verhält es sich gerade umgekehrt.

Da die bisher beschriebenen Teilmodulatorstufen nicht aus idealen Bauelementen bestehen, liegt am Signalausgang 3′ auch dann eine resultierende Trägerspannung $U_{mc}$ an, wenn auch keine Modulationsspannung $U_m$ dies bewirkt.

Die beschriebene Teilmodulatorstufe 1′ stellt somit einen einfachen im Transmissionsbetrieb betriebenen Phasenumschalter dar, der als Teil eines digitalen Direktmodulators betrieben wird.

Bei der Realisierung einer solchen Modulatorstufe 70 kann man sich leicht vorstellen, daß das zur Trägerunterdrückung notwendige Brückengleichgewicht ebenso wie die Amplitudenlinearität durch z.B. die Ungleichheit der Halbleiterdioden und deren parasitärer Komponenten gestört werden, was zu einer Abweichung des idealen Verhaltens der Modulatorstufe 70 führt. Weiter erfolgt die Übertragung das eine Mal über den elektrisch kurzen Weg 7 und das andere Mal über den Phasenverzögerungsweg 6. Da die beiden Wege im Aufbau auch elektrisch ungleich sind, sind auch in den beiden Wegen die Gruppenlaufzeiten ungleich und führen zu hohen Frequenzabhängigkeiten, die durch zusätzliche Maßnahmen kompensiert werden müssen.

Das Problem der Trägerunterdrückung bei nicht anliegender Modulationsspannung $U_m$ wird bei der Erfindung im einen Punkt durch den regelbaren Widerstand $R_R'$ und im anderen Punkt durch den symmetrischen Aufbau der Doppelmodulatorstufe 1 nach Fig. 1 gelöst.

Bei der Doppelmodulatorstufe 1 sind die beiden Trägereingänge 2′, 2″ über einen 0°-Leistungsteiler 37 zu einem gemeinsamen Trägereingang 2 der Doppelmodulatorstufe 1 zusammengefaßt und durch die Kondensatoren $C_{K1}'$, $C_{K1}''$ galvanisch entkoppelt. Die beiden Signalausgänge 3′, 3″ werden in einem Leistungskombinator, z.B. einem Übertrager 11, zusammengeführt, dessen Sekundärwicklung den Ausgang 3 der Gegentaktmodulatorstufe 1 bildet. Die beiden Signaleingänge 4′, 4″ werden mit demselben Modulationssignal versorgt, wobei vor einem der beiden Signaleingänge 4′ oder 4″ ein Signalinverter (nicht abgebildet) angeordnet ist, der dafür sorgt, daß an jedem der beiden Signaleingänge eine Modulationsspannung $U_m$ mit gleichem Betrag und entgegengesetztem Vorzeichen anliegt. Anstelle der Invertierung der Modulationssignale können auch Modulationssignale mit gleichem Vorzeichen an den Signaleingängen 4′ und 4″ anliegen, wenn die Polarität der Diodenpaare $D_1'$, $D_2'$ der Teilmodulatorstufe 1′ in bezug auf den Trägereingang 2 der entgegengesetzten Polarität der den Diodenpaaren $D_1''$, $D_2''$ der Teilmodulatorstufe 1′ entspricht.

Der Trägereingang 2 der Doppelmodulatorstufe 1 ist entsprechend des Betrages der Modulationsspannung $U_m$, z.B. bei positiver Modulationsspannung $U_m$ am Signaleingang 4′ und negativer Modulationsspannung $U_m$ am Signaleingang 4″ über den elektrisch kurzen Weg 7′ der Teilmodulatorstufe 1′ und über den Phasenverzögerungsweg 6″ der Teilmodulatorstufe 1″ und den Übertrager 11 mit dem Signalausgang 3 verbunden. Bei entgegengesetztem Vorzeichen der Modulationsspannung $U_m$ an den Signaleingängen 4′, 4″ erfolgt die Verbindung über den Phasenverzögerungsweg 6′ der Teilmodulatorstufe 1′ und den elektrisch kurzen Weg 7″ der Teilmodulatorstufe 1″.

Es ist auf jeden Fall gewährleistet, daß die Übertragung jeweils über einen elektrisch kurzen Weg 7′, 7″ und einen Phasenverzögerungsweg 6″, 6′ erfolgt. Auf diese Weise werden technische Unzulänglichkeiten der Teilmodulatorstufen 1', 1" kompensiert, die Gruppenlaufzeiten sind in jedem Schaltzustand nahezu gleich und die Doppelmodulatorstufe 1 verhält sich weitgehend temperaturstabil und innerhalb der für den Richtfunk vorgesehenen Trägerfrequenzen amplitudenlinear und frequenzunabhängig.

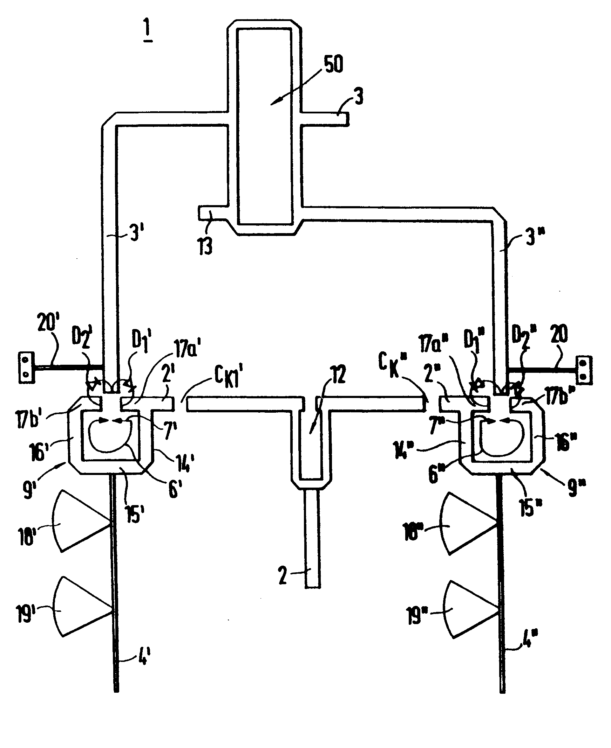

Ein erstes Ausführungsbeispiel einer Doppelmodulatorstufe 1 ist in Fig. 2 abgebildet. Sie weist die gleichen Funktionseinheiten wie die in Fig. 1 abgebildete Doppelmodulatorstufe 1 auf, ist aber konkret für einen Träger $U_c$ mit einer Frequenz im Gigahertzbereich und für eine Modulationsspannung $U_m$ mit einer Frequenz im Megahertzbereich in planarer Streifenleitertechnik ausgelegt. Die Anordnung der Funktionseinheiten entspricht der aus Fig. 1. Im folgenden werden nur die für das Ausführungsbeispiel 1 spezifischen Funktionseinheiten näher erläutert. Gegenüber Fig. 1 sind gleiche Funktionseinheiten auch mit gleichen Bezugszeichen versehen.

Die Doppelgegentaktmodulatorstufe 1 weist zwei Teilmodulatorstufen 1', 1" mit einem gemeinsamen Trägereingang 2 und einem gemeinsamen Signalausgang 3 auf. Die Trägerspannung $U_c$ liegt am Trägereingang 2', 2" der beiden Teilmodulatorstufen 1', 1" über einen sogenannten Wilkinsonkoppler 12 an. Die beiden Trägereingänge 2', 2" sind dabei jeweils über eine Kapazität $C_{K1}'$, $C_{K1}"$ vom Wilkinsonkoppler 12', 12" galvanisch getrennt. Die Signalausgänge 3', 3" werden über einen 180°-Leistungskombinator 50 in Form eines sogenannten Rate Race Ring zusammengeführt.

Der Rate Race Ring 50 weist als Eingang die beiden Signalausgänge 3', 3" der Teilmodulatorstufen 1', 1", als Ausgang den Ausgang 3 der Doppelgegentaktmodulatorstufe 1 und einen 50 Ohm Abschluß 13 gegen Masse auf, er bewirkt ein nochmaliges Verschieben der Phasen der aus der Teilmodulatorstufe 1' austretenden modulierten Trägerspannung $U_{mc}'$ gegenüber der aus der Teilmodulatorstufe 1" austretenden Trägerspannung $U_{mc}"$ von 180° und führt diese somit phasenrichtig zusammen.

Jede der beiden Teilmodulatorstufen 1', 1" weist gemäß Fig. 2 vier, die Fläche eines Vierecks einschließende Streifen 14', 14", 15', 15", 16', 16", 17' (17a', 17b'), 17" (17a", 17b") auf, wobei die drei äußeren Ecken zwischen den Streifen 14', 15'; 15', 16'; und 16', 17b' entsprechend 14", 15"; 15", 16" und 16", 17b" unter einem Winkel von 45° abgeschrägt sind. Der Streifen 17', 17" ist in der Mitte unterbrochen und weist zwei Streifenteile 17a', 17a" und 17b', 17b" auf. An den Enden zwischen den Streifen 14', 17a'; 14", 17a" ist der Trägereingang 2', 2" angeordnet. Zwischen dem Streifenteil 17a', 17a" und dem Signalausgang 3', 3" ist vom Streifenteil 17a', 17a" aus betrachtet eine Halbleiterdiode $D_1'$, $D_1"$ in pn-Richtung und zwischen dem Streifenteil 17b', 17b" und dem Signalausgang 3', 3" vom Streifenteil 17b', 17b" aus betrachtet ist eine Halbleiterdiode $D_2'$, $D_2"$ in np-Richtung angeordnet.

Der Streifenteil 17a', 17a" und die Halbleiterdiode $D_1'$, $D_1"$ bilden den elektrisch kurzen Weg 7', 7" und die Streifenteile 14', 15', 16', der Streifenteil 17b' und die Halbleiterdiode $D_2'$, entsprechend 14", 15", 16", 17b" und $D_2"$, bilden den Phasenverzögerungsweg 6', 6", dabei weisen die Streifen 14, 15, 16 und der Steifenteil 17b abzüglich der Länge des Streifenteils 17a eine Länge der halben Wellenlänge der Mittenfrequenz des Trägers auf und stellen somit das Phasenverzögerungsglied 9', 9" dar. Es ist dabei nicht wesentlich, daß die Streifen 14', 14" bis 17', 17" die Fläche eines Vierecks einschließen, sondern daß die Differenz der Weglängen zwischen dem Phasenverzögerungsweg 6', 6" und dem elektrisch kurzen Weg 7', 7" der halben Länge der mittleren Wellenlänge des Trägers oder dem ungeradzahligen, ganzen Vielfachen dieser halben Wellenlänge entspricht. Der Längenunterschied zwischen den beiden Wegen bewirkt die gewünschte Phasenverzögerung von 180°.

Am Streifen 15 ist, bezüglich der Länge, in der Mitte der Signaleingang 4', 4" angeordnet. Es ist vorteilhaft, den Signaleingang 4', 4" symmetrisch zum Signalausgang 3', 3" anzuordnen. Es können anstelle eines Signaleingangs auch zwei oder mehrere Signaleingänge angeordnet werden. Die Signaleingänge 4', 4" sind mit Filterelementen 18', 18", 19', 19" versehen, die ein Austreten des Trägers zur Modulationsspannungsquelle hin verhindern. Die Signalausgänge 3', 3" sind über die Leitung 20', 20" für das Modulationssignal $U_m$ mit Masse verbunden. Die an den Signaleingängen 4', 4" anliegenden regelbaren Widerstände $R_R$ zum Ansteuern der Teilmodulatiorstufen 1', 1" sind nicht in Fig. 2 eingezeichnet.

Die Doppelmodulatorstufe 1 gemäß Ausführungsbeispiel 1 ist in einfacher planarer Streifenleitertechnik aufgebaut und mit den Dioden $D_1'$, $D_1"$, $D_2'$, $D_2"$ bestückt.

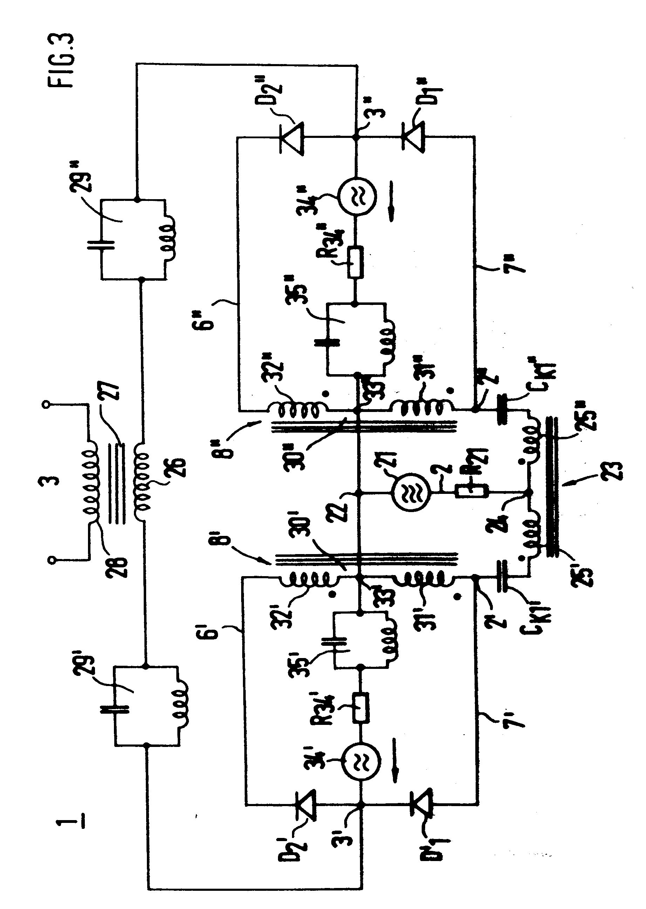

Ein zweites Ausführungsbeispiel einer Doppelmodulatorstufe 1 ist in Fig. 3 abgebildet. Für sie gilt, wie auch für die Doppelmodulatorstufe 1 aus Ausführungsbeispiel 1, daß sie die gleichen Funktionseinheiten wie die aus Fig. 1 abgebildete aufweist. Gleiche Merkmale sind daher auch mit gleichen Bezugszeichen versehen. Konkret ist sie für einen Träger $U_c$ mit einer Wellenlänge im Megahertzbereich und einer entsprechend niedrigeren Frequenz des Modulationssignals $U_m$ ausgelegt.

Die Doppelmodulatorstufe 1 weist zwei Teilmodulatorstufen 1', 1" mit einem gemeinsamen Signalausgang 3 auf. Der Träger $U_c$ wird im Oszillator 21 erzeugt, der auf der einen Seite an Masse 22 liegt und über die andere Seite mit den Trägereingängen 2', 2" verbunden ist. Zwischen dem Oszillator 21 und den Trägereingängen 2' und 2" liegt ein Spartransformator 23. Dabei liegt der Oszillator 21 an der Anzapfung 24 an und die beiden Wicklungsenden 25' und 25" sind über Koppelkondensatoren $C_{K1}'$ und $C_{K1}"$ mit den Trägereingängen 2', 2"

verbunden. Der Spartransformator 23 stellt einen 0°-Leistungsteiler und der Widerstand $R_{21}$ den Innenwiderstand des Oszillators 21 dar.

Die Signalausgänge 3', 3'' sind mit den beiden Wicklungsenden der Primärwicklung 26 eines Transformators 27 verbunden, der als Übertrager 11 dient. Die Wicklungsenden der Sekundärwicklung stellen den Signalausgang 3 der Doppelgegentaktmodulatorstufe 1 dar. Zur Unterdrückung der Modulationsspannung $U_m$ am Signalausgang 3 sind jeweils zwischen den Wicklungsenden der Primärspule 26 und den Signalausgängen 3' und 3'' für das Modulationssignal $U_m$ hochohmige Parallelschwingkreise 29', 29'' angeordnet.

Jede der beiden Teilmodulatorstufen 1', 1'' weist einen Phasenverzögerungsweg 6', 6'' und einen elektrisch kurzen Weg 7', 7'' auf. Der Phasenverzögerungsweg 6', 6'' weist einen Spartransformator 30', 30'' und eine Halbleiterdiode $D_2'$, $D_2''$ auf. Der Spartransformator 30', 30'' stellt das Phasenverzögerungsglied 9 dar, in dem die Phase des Trägers eine Umkehr von 180° erfährt. Der elektrisch kurze Weg 7', 7'' weist eine Halbleiterdiode $D_1'$ $D_1''$ auf. Die Polarität der Dioden entspricht der aus dem Ausführungsbeispiel 1.

Zwischen dem Signalausgang 3', 3'' und der Anzapfung 33', 33'' wird das Modulationssignal in einem Generator 34', 34'' erzeugt, der am Ausgang 3', 3'' anliegt und über einen Parallelschwingkreis 35', 35'' mit der Anzapfung 33', 33'' verbunden ist. Die Widerstände $R_{34}'$, $R_{34}''$ stellen die Innenwiderstände der Oszillatoren 34', 34'' dar. Der Parallelschwingkreis 35', 35'' ist für den Träger $U_c$ hochohmig.

Die beiden Wicklungsteile 31', 32'; 31'', 32'' des Spartransformators 30', 30'' und die beiden Halbleiterdioden $D_1'$ $D_2'$; $D_1''$, $D_2''$ wirken wie eine Wheatstonsche Brücke, bei der zwischen dem Ausgang 3', 3'' und der Anzapfung 33', 33'' Gleichgewicht herrscht, solange keine Modulationsspannung $U_m$ anliegt. Liegt dagegen eine Modulationsspannung $U_m$ an, wird das Gleichgewicht der Brücke aufgehoben und am Ausgang 3', 3'' liegt die modulierte Trägerspannung $U_{mc}$ an.

Da der Spartransformator 30', 30'' nicht ideal realisiert werden kann, erfährt die Phase des Trägers $U_c$ in Wirklichkeit keine Umkehr von 180° sondern ist mit einem gewissen Phasenfehler behaftet, was letztlich eine totale Trägerspannungsunterdrückung am Ausgang 3', 3'' bei nicht anliegender Modulationsspannung $U_m$ verhindert. Diese Restträgerspannung wird durch die ebenfalls symmetrische Anordnung der beiden Teilmodulatorstufen 1', 1'' weitgehend unterdrückt.

In Fig. 4 ist die an und für sich bekannte schematische Darstellung eines 16 QAM-Modulator 49 (Quadratur Amplituden Modulation) für eine Bitfolgefrequenz von 140 MBit/s abgebildet. Er besteht im wesentlichen aus zwei Doppelmodulatorstufen 40, 41, wobei die eine Doppelmodulatorstufe 40 das Signal für die I-Komponente und die Doppelmodulatorstufe 41 das Signal für die Q-Komponente liefert. Im Leistungskombinator 42 werden die beiden Komponenten orthogonal zusammengeführt.

Der Ausgang 43 des Leistungskombinators 42 bildet den Ausgang des 16 QAM-Modulators 49. Der Träger $U_c$ liegt an den Trägereingängen 2 der beiden Modulatorstufen 40, 41 über einen sogenannten Wilkinsonkoppler 45 an. An den Signaleingängen 46, 47 der beiden Doppelmodulatorstufen 40, 41 liegen jeweils die Modulationssignale für die I-bzw. Q-Komponenten, wobei jeweils an einer Doppelmodulatorstufe 40, 41 für die I- bzw. Q-Komponente ein Modulationssignal $U_m$ mit gleichem Betrag und entgegengesetzten Vorzeichen anliegt.

Als Halbleiterdioden $D_1'$, $D_1''$, $D_2'$, $D_2''$ eignen sich besonders Schottkydioden, die z.B. gegenüber Pindioden kürzere Verzögerungszeiten aufweisen. Die Temperaturabhängigkeit der Dioden wird durch die paarweise Anordnung in der Brückenschaltung kompensiert. Herstellungsbedingte Unterschiede der Dioden sind z.B. durch Anlegen einer Gleichspannung über den regelbaren Widerstand am Signaleingang auszugleichen und damit die Trägerunterdrückung zu optimieren. Der Trennwiderstand wird so eingestellt, daß bei nicht Anlegen der Modulationsspannung $U_m$ Brückengleichgewicht herrscht.

Die beschriebene Modulatorstufe 1 kann auch als Sende- oder Empfangsmischstufe (nicht abgebildet) betrieben werden. Als ein Beispiel wird die Verwendung der Modulatorstufe 1 des ersten Ausführungsbeispiels als Sendemischstufe herangezogen. Die im ersten Ausführungsbeispiel beschriebenen Signaleingänge 4' und 4'' sind dabei zur Einkopplung des in seiner Frequenz umzusetzenden Signals vorgesehen. Für den Fall, daß die Polarität des Diodenpaares $D_1'$, $D_2'$, bezogen auf den Trägereingang 2'', wie in Fig. 2 abgebildet, der des Diodenpaares $D_1''$, $D_2''$ entspricht, muß das in seiner Frequenz umzusetzende Signal an einem der beiden Signaleingänge invertiert werden. Für den Fall, daß die Polarität des Diodenpaares $D_1'$, $D_2'$, bezogen auf den Trägereingang 2'', der des Diodenpaares $D_1''$, $D_2''$ nicht entspricht, können die beiden Signaleingänge direkt miteinander verbunden sein.

Entsprechendes gilt auch für die Verwendung des 16 QAM Modulators 49 als Mischer, der empfangsseitig als spiegelunterdrückender Mischer und sendeseitig als Einseitenbandmischer betrieben werden kann. Hierzu ist es allerdings bei der Ausnützung beider Kopplungszweige I und Q notwendig, diese über einen 90°-Leistungskombinator miteinander zu verbinden.

Die Verwendung einer Modualtorstufe als Mischstufe ist prinzipiell bekannt und bedarf daher keiner weiteren Erläuterung.

**Patentansprüche**

1. Modulatorstufe zum Bilden eines modulierten Trägersignales aus einem Träger und einem Modulationssignal mit einem Träger- und einem Signaleingang und einem Signalausgang,
   - bei der vom Trägereingang (2) zum Signalausgang (3) ein elektrisch kurzer Weg (7', 7") und ein Phasenverzögerungsweg (6', 6") führen,
   - bei der die Phase des Trägers im Phasenverzögerungsweg gegenüber der Phase des Trägers im elektrisch kurzen Weg eine Phasenverschiebung von etwa 180° oder ein ungeradzahliges, ganzes Vielfaches von 180° erfährt,
   - bei der auf dem Phasenverzögerungsweg ein Phasenverzögerungsglied (39', 39") angeordnet ist,
   - bei der sich auf jedem der beiden Wege ein nichtlineares Halbleiterbauelement (D1', D1", D2', D2") befindet, wobei die Halbleiterbauelemente bezüglich der Ausbreitungsrichtung des Trägers entgegengesetzte Polarität aufweisen und auf den beiden Wegen so angeordnet sind, daß sie hinsichtlich des Trägers im Gleichtakt betreibbar sind, und
   - bei der der Signaleingang mit dem Phasenverzögerungsweg derart verbunden ist, daß die Modulatorstufe hinsichtlich des Signals im Gegentakt betreibbar ist,
   **dadurch gekennzeichnet,**
   - daß die Modulatorstufe als aus zwei Teilmodulatorstufen (1',1") bestehende Doppelmodulatorstufe (1) ausgebildet ist,
   - daß die beiden Trägereingänge (2', 2") und die beiden Signalausgänge (3', 3") der beiden Teilmodulatorstufen (1', 1") jeweils miteinander verbunden sind, und
   - daß eine Vorrichtung (11, 23) zur skalaren Addition der um 180° phasenverschobenen modulierten Trägerspannung ($U_{mc}'$, $U_{mc}"$) der Teilmodulatorstufen 1' und 1" vorgesehen ist.

2. Modulatorstufe nach Anspruch 1, dadurch gekennzeichnet,
   - daß die nichtlinearen Halbleiterbauelemente Dioden ($D_1'$, $D_2'$, $D_1"$, $D_2"$) sind,
   - daß die Polarität des Diodenpaares ($D_1'$, $D_2'$) einer Teilmodulatorstufe (1'), in bezug auf den Trägereingang (2), der Polarität der Dioden ($D_1"$, $D_2"$) der anderen Teilmodulatorstufe (1") entspricht, und
   - daß an den Signaleingängen (4', 4") die gleichen Signale mit entgegengesetztem Vorzeichen anliegen.

3. Modulatorstufe nach Anspruch 1, dadurch gekennzeichnet,
   - daß die nichtlinearen Halbleiterbauelemente Dioden ($D_1'$, $D_2'$; $D_1"$, $D_2"$) sind,
   - daß die Polarität des Diodenpaares ($D_1'$, $D_2'$) einer Teilmodulatorstufe (1'), in bezug auf den Trägereingang der entgegengesetzten Polarität der Dioden ($D_1"$, $D_2"$) der anderen Teilmodulatorstufe (1") entspricht, und
   - daß an den Signaleingängen (4', 4") die gleichen Signale mit gleichen Vorzeichen anliegen.

4. Modulatorstufe nach Anspruch 1, dadurch gekennzeichnet, daß das Phasenverzögerungsglied (9', 9") eine in Streifenleitertechnik ausgebildete Leitung ist, die eine Länge $\frac{\lambda}{2}$ der mittleren Wellenlänge des Trägers ($U_c$) aufweist.

5. Modulatorstufe nach Anspruch 1, dadurch gekennzeichnet, daß das Phasenverzögerungsglied (8', 8") aus den beiden Teilwicklungen (31', 31", 32', 32") eines Spartransformators (30', 30") besteht und der Signaleingang (4', 4") zwischen der Anzapfung (33', 33") des Spartransformators (30', 30") und dem Ausgang (3', 3") der Teilmodulatorstufe (1', 1") anliegt.

6. Modulatorstufe nach Anspruch 4, dadurch gekennzeichnet, daß die Vorrichtung (11) zur skalaren Addition ein zwischen den Ausgängen (3', 3") der Teilmodulatorstufen (1', 1") und dem Ausgang (3) der Doppelmodulatorstufe (1) angeordneter 180°-Koppler (11) ist.

7. Modulatorstufe nach Anspruch 5, dadurch gekennzeichnet, daß die Vorrichtung (23) zur Verschiebung der Phase des Trägers ($U_c$) zwischen dem Trägereingang (2) der Doppelmodulatorstufe (1) und den Trägereingängen (2', 2") der Teilmodulatorstufen (1', 1") angeordneter Spartransformator (23) ist, und die Anzapfung (24) mit dem Trägereingang (2) der Doppelmodulatorstufe (1) und die Wicklungsenden (25', 25") mit den Trägereingängen (2', 2") der Teilmodulatorstufen (1', 1") verbunden sind.

**8.** Modulatorstufe nach Anspruch 1, dadurch gekennzeichnet, daß jeder Signaleingang (4′, 4″, ...) der Teilmodulatorstufen (1′, 1″) mit einem regelbaren Widerstand ($R_R′$, $R_R″$), zum Abgleich der Teilmodulatorstufe angeordnet ist.

**9.** Modulatorstufe nach Anspruch 1, dadurch gekennzeichnet, daß das nichtlineare Halbleiterbauelement ($D_1′$, $D_2′$, $D_1″$, $D_2″$) eine Schottkydiode ist.

**10.** Modulatorstufe nach Anspruch 1, dadurch gekennzeichnet, daß die Teilmodulatorstufen (1′, 1″) als amplitudenlineare Phasenumschalter ausgebildet sind.

**11.** Modulatorstufe nach einem der vorhergehenden Ansprüche 1 bis 10, dadurch gekennzeichnet, daß sie als Mischstufe verwendet wird.

## Claims

**1.** A modulator for producing a modulated carrier signal from a carrier and a modulation signal with one carrier input and one signal input and one signal output,
- wherein an electrically short path (7′,7″) and a phase delay path (6′,6″) lead from the carrier input (2) to the signal output (3)
- wherein the phase of the carrier in the phase delay path undergoes a phase shift of approximately 180° or an odd, whole multiple of 180° compared to the phase of the carrier in the electrically short path,
- wherein a phase delay line (39′,39″) is disposed on the phase delay path,
- wherein a nonlinear semiconductor component (D1′,D1″,D2′,D2″) is located on each of the two paths, which semiconductor components have polarity opposite the propagation direction of the carrier and are disposed on the two paths in such a way that they are capable of parallel operation relative to the carrier, and
- wherein the signal input is linked with the phase delay path in such a way that the modulator is capable of push-pull operation relative to the signal,

characterized in that
- the modulator is designed as a double modulator (1) consisting of two partial modulators (1′, 1″),
- the two carrier inputs (2′, 2″) and the two signal outputs (3′, 3″) of the two partial modulators (1′, 1″) are linked respectively to each other, and
- a mechanism (11, 23) is provided for scalar addition of the 180° phase-shifted modulated carrier voltage ($U_{mc}′$, $U_{mc}″$) of the partial modulators 1′ and 1″.

**2.** The modulator claimed in 1, characterized in that
- the nonlinear semiconductor components are diodes ($D_1′$, $D_2′$, $D_1″$, $D_2″$),
- the polarity of the diode pair ($D_1′$, $D_2′$) of one partial modulator (1′) relative to the carrier input (2) matches the polarity of the dicdes ( $D_1″$, $D_2″$) of the other partial modulator (1″), and
- the same signals with opposite signs are applied to the signal inputs (4′, 4″).

**3.** The modulator claimed in 1, characterized in that
- the nonlinear semiconductor components are diodes ($D_1′$, $D_2′$; $D_1″$, $D_2″$),
- the polarity of the diode pair ($D_1′$, $D_2′$) of one partial modulator (1′) relative to the carrier input is opposite the polarity of the diodes ( $D_1″$, $D_2″$) of the other partial modulator (1″), and
- the same signals with the same signs are applied to the signal inputs (4′, 4″).

**4.** The modulator claimed in 1, characterized in that the phase delay line (9′, 9″) is a conductor formed by microstrip technology with a length λ/2 of the center wavelength of the carrier ($U_c$).

**5.** The modulator claimed in 1, characterized in that the phase delay line (8′, 8″) consists of the two partial windings (31′, 31″, 32′, 32″) of an autotransformer (30′, 30″) and the signal input (4′, 4″) is applied between the tap (33′, 33″) of the autotransformer (30′, 30″) and the output (3′, 3″) of the partial modulator (1′, 1″).

**6.** The modulator claimed in 4, characterized in that the mechanism (11′) for scalar addition is a 180° coupler disposed between the outputs (3′, 3″) of the partial modulator (1′, 1″) and the output (3) of the double modulator (1).

7. The modulator claimed in 5, characterized in that the mechanism (23) for shifting the phase of the carrier ($U_c$) is an autotransformer disposed between the carrier input (2) of the double modulator (1) and the carrier inputs (2', 2'') of the partial modulators (1', 1''), and the tap (24) is linked with the carrier input (2) of the double modulator (1) and the coil ends (25', 25'') are linked with the carrier inputs (2', 2'') of the partial modulators (1', 1'').

8. The modulator claimed in 1, characterized in that each signal input (4', 4'', ...) of the partial modulators (1', 1'') is arranged with a regulable resistor ($R_R'$, $R_R''$) to balance the partial modulator.

9. The modulator claimed in 1, characterized in that the nonlinear semiconductor component ($D_1'$, $D_2'$, $D_1''$, $D_2''$) is a Schottky diode.

10. The modulator claimed in 1, characterized in that the partial modulators (1', 1'') are designed as amplitude linear phase adjusters.

11. The modulator claimed in one of the preceding 1 through 10, characterized in that it is used as a mixer.

**Revendications**

1. Étage modulateur pour former le signal de la porteuse modulée à partir d'une porteuse et d'un signal de modulation, comportant une entrée de la porteuse et une entrée du signal et une sortie du signal,
   - dans le cas duquel conduisent de l'entrée (2) de la porteuse à la sortie (3) du signal un chemin électriquement court (7', 7'') et un chemin de retardement de phase (6', 6''),
   - dans le cas duquel la phase de la porteuse subit, sur le chemin de retardement de phase, par rapport à la phase de la porteuse sur le chemin électriquement court, un déphasage d'environ 180° ou d'un multiple impair entier de 180°,
   - dans le cas duquel un élément de retardement de phase (39', 39'') est disposé sur le chemin de retardement de phase,
   - dans le cas duquel un composant semiconducteur non linéaire ($D_1'$, $D_1''$, $D_2'$, $D_2''$) se trouve sur chacun des deux chemins, les composants semiconducteurs présentant, relativement au sens de propagation de la porteuse, une polarité opposée et étant disposés sur les deux chemins de façon à pouvoir être exploités en synchronisme en ce qui concerne la porteuse, et
   - dans le cas duquel l'entrée du signal est reliée avec le chemin de retardement de phase de façon telle que l'étage modulateur puisse être exploité en antisynchronisme en ce qui concerne le signal,
   caractérisé
   - par le fait que l'étage du modulateur est conçu sous forme d'étage modulateur double (1) constitué de deux étages modulateurs partiels (1', 1''),
   - que les deux entrées (2', 2'') de la porteuse et les deux sorties (3', 3'') du signal des deux étages modulateurs partiels (1', 1'') sont respectivement reliés l'une à l'autre, et
   - qu'il est prévu un dispositif (11, 23) pour l'addition scalaire de la tension de la porteuse ($U_{mc}'$, $U_{mc}''$) modulée et déphasée de 180° des étages modulateurs partiels 1' et 1''.

2. Etage modulateur selon la revendication 1, caractérisé
   - par le fait que les composants semiconducteurs non linéaires sont des diodes ($D_1'$, $D_2'$, $D_1''$, $D_2''$),
   - que la polarité de la paire de diodes ($D_1'$, $D_2'$) d'un étage modulateur partiel (1') correspond, par rapport à l'entrée (2) de la porteuse, à la polarité des diodes ($D_1''$, $D_2''$) de l'autre étage modulateur partiel (1''), et
   - qu'aux entrées (4', 4'') du signal se trouvent les mêmes signaux avec un signe opposé.

3. Etage modulateur selon la revendication 1, caractérisé
   - par le fait que les composants semiconducteurs non linéaires sont des diodes ($D_1'$, $D_2'$; $D_1''$, $D_2''$),
   - que la polarité de la paire de diodes ($D_1'$, $D_2'$) d'un étage modulateur partiel (1') correspond, par rapport à l'entrée de la porteuse, à la polarité opposée à celle des diodes ($D_1''$, $D_2''$) de l'autre étage modulateur partiel (1''), et
   - qu'aux entrées (4', 4'') du signal se trouvent les mêmes signaux avec les mêmes signes.

4. Étage modulateur selon la revendication 1, caractérisé par le fait que l'élément de retardement de phase (9', 9") est une ligne qui est conçue en technique de ligne à rubans et présente une longueur $\lambda/2$ de la longueur d'onde moyenne de la porteuse ($U_c$).

5. Étage modulateur selon la revendication 1, caractérisé par le fait que l'élément de retardement de phase (8', 8") est constitué de deux bobinages partiels (31', 31", 32', 32") d'un transformateur économiseur (30', 30") et que l'entrée (4', 4") du signal se trouve entre la borne (33', 33") du transformateur économiseur (30', 30") et la sortie (3, 3") de l'étage modulateur partiel (1', 1").

6. Étage modulateur selon la revendication 4, caractérisé par le fait que le dispositif (11) prévu pour l'addition scalaire est un coupleur à 180° disposé entre les sorties (3', 3") des étages modulateurs partiels (1', 1") et la sortie (3) de l'étage modulateur double (1).

7. Étage modulateur selon la revendication 5, caractérisé par le fait que le dispositif (23) prévu pour décaler la phase de la porteuse ($U_c$) est un transformateur économiseur (23) disposé entre l'entrée (2) de la porteuse de l'étage modulateur double (1) et les entrées (2', 2") de la porteuse des étages modulateurs partiels (1', 1"), et que la borne (24) est reliée avec l'entrée (2) de la porteuse de l'étage modulateur double (1) et que les extrémités (25', 25" du bobinage sont reliées avec les entrées (2', 2") de la porteuse des étages modulateurs partiels (1', 1").

8. Étage modulateur selon la revendication 8, caractérisé par le fait que chaque entrée (4', 4", ...) du signal des étages modulateurs partiels (1', 1") comporte une résistance réglable (RR', RR") pour l'alignement des étages modulateurs partiels.

9. Étage modulateur selon la revendication 1, caractérisé par le fait que le composant semiconducteur non linéaire ($D_1'$, $D_2'$; $D_1"$, $D_2"$) est une diode Schottky.

10. Étage modulateur selon la revendication 1, caractérisé par le fait que les étages modulateurs partiels (1', 1") sont conçus sous forme de commutateurs de phase linéaires en amplitude.

11. Étage modulateur selon l'une des revendications précédentes 1 à 10, caractérisé par le fait qu'il est employé comme étage mélangeur.

FIG.1

FIG.4

FIG.3

EP 0 432 674 B1